# EUROPEAN PATENT APPLICATION

(11) **EP 2 388 553 A1**
(43) Date of publication of application: **23.11.2011**
(21) Application number: 11002589.7
(22) Date of filing: 29.03.2011
(51) Int. Cl.: G01C 21/20, H04W 4/02, H04L 29/08, G06F 3/048

(54) **Method, mobile device and computer program product for processing location information**

(30) Priority: 29.03.2010 US 318783 P
(71) Applicant: HTC Corporation, Taoyuan County 330 (TW)
(72) Inventor: Lee, Yu-Cheng, Taoyuan City Taoyuan County 330 (TW)
(74) Representative: Schmidbauer, Andreas Konrad

(57) **Abstract**

A method, a mobile device, and a computer program product for processing location information are provided. In the present method, first location information last recorded by a mobile device is accessed and displayed on a screen. When an update operation is received, the mobile device is positioned to obtain second location information of a current location of the mobile device. The second location information is compared with the first location information. If the second location information is different from the first location information, the second location information is recorded and used for updating the first location information displayed on the screen.

## Description

In recent years, different types of small-sized and highly portable electronic devices, such as cellular phones and smart phone, have been developed along with the advancement of the electronic technology and the communication technology. Such mobile devices are usually integrated with many different functions in order to improve their market competitiveness. Besides the most common camera, phone call, and Internet access functions, global positioning system (GPS), and electronic maps have also been integrated into handheld communication devices. Thereby, a user can get to know his/her own location through the GPS function of a mobile device anytime and anywhere.

Even though the GPS function of a mobile device allows a user to know his/her current location, since the user may go to different places or points of interest (POIs) or may even go back and forth between these places or POIs (for example, the user may leave his/her office to go to a client company and then come back to his/her office) during each day, the user will have to set new destinations all the time in order to find the return routes. In addition, even though functions or network services for recording user movements have already been provided, only the moving tracks of the user can be recorded.

Besides obtaining the current location, sometimes a user may need to notify someone else about his/her current location. One who is not familiar with the area may not be able to identify the location if simply the coordinates or address of the location are sent to him/her.

### SUMMARY

Accordingly, the application is directed to a method, a mobile device, and a computer program product for processing location information, wherein a current location and a history record of previously passed locations are provided to a user as a reference.

The application provides a location information processing method adapted to a mobile device having a screen. In the location information processing method, first location information last recorded by the mobile device is accessed and displayed on the screen. When an update operation is received from a user, the mobile device is positioned to obtain second location information of the current location of the mobile device. Then, the second location information is compared with the first location information. If the second location information is different from the first location information, the second location information is recorded and used for updating the first location information displayed on the screen.

In an example of the application, the step of recording the second location information and using the second location information to update the first location information displayed on the screen further comprises determining an error range of the second location information according to the type of a positioning tool used for positioning the mobile device to obtain the second location information and displaying the error range on the screen.

In an example of the application, the step of using the second location information to update the first location information displayed on the screen further comprises searching a point-of-interest (POI) database to find at least one POI close to the location corresponding to the second location information, accessing a POI information of the POI, and displaying the POI information in a POI information field on the screen.

In an example of the application, after the step of accessing the POI information of the POI and displaying the POI information in a POI information field on the screen, the location information processing method further comprises receiving a share operation from the user, converting the second location information and the POI information into a message, and sending the message to at least one contact appointed by the share operation.

In an example of the application, the step of recording the second location information and using the second location information to update the first location information displayed on the screen further comprises recording the second location information in a location history record and displaying the location history record in a history record field on the screen.

In an example of the application, the step of comparing the second location information with the first location information comprises calculating a distance between the first location information and the second location information and determining whether the distance exceeds a threshold, wherein if the distance exceeds the threshold, it is determined that the second location information is different from the first location information, and if the distance does not exceed the threshold, it is determined that the second location information is the same as the first location information.

The application provides a mobile device comprising a storage unit, a display unit, an input unit, a positioning unit, and a processing unit. The storage unit records a plurality of location information. The display unit displays first location information last recorded by the storage unit. The input unit receives an operation from a user. The positioning unit performs a positioning operation to obtain second location information of a current location. The processing unit is coupled to the storage unit, the display unit, the input unit, and the positioning unit. When the input unit receives an update operation, the processing unit controls the positioning unit to perform the positioning operation and compares the second location information with the first location information. If the second location information is different from the first location information, the processing unit records the second location information into the storage unit and uses the second location information to update the first location information displayed in the display unit.

In an example of the application, the processing unit further determines an error range of the second location information according to the type of the positioning unit and displays the error range in the display unit.

In an example of the application, the processing unit further searches a POI database to find at least one POI close to a location corresponding to the second location information, accesses POI information of the POI, and displays the POI information in a POI information field in the display unit.

In an example of the application, when the input unit receives a share operation, the processing unit further converts the second location information and the POI information into a message and sends the message to at least one contact appointed by the share operation.

In an example of the application, the processing unit further records the second location information in a location history record in the storage unit and displays the location history record in a history record field in the display unit.

In an example of the application, the processing unit calculates a distance between the first location information and the second location information and determines whether the distance exceeds a threshold. If the distance exceeds the threshold, the processing unit determines that the second location information is different from the first location information, and if the distance does not exceed the threshold, the processing unit determines that the second location information is the same as the first location information.

The application provides a computer program product to be loaded into a mobile device to execute the location information processing method described above. The computer program product is composed of a plurality of program instructions (for example, an organization chart establishing program instruction, a table approving program instruction, a setting program instruction, and a deployment program instruction, etc). These program instructions can be loaded into a mobile device and executed by the same to accomplish the location information processing method described above.

As described above, the application provides a method, a mobile device, and a computer program product for processing location information, wherein a mobile device is instantly positioned to obtain the current location thereof when an update operation performed by a user is received, and the current location is compared with previously recorded location information to update the location information and history records displayed on the screen of the mobile device, so as to provide a reference to the user.

### BRIEF DESCRIPTION OF THE DRAWINGS

The accompanying drawings are comprised to provide a further understanding of the application, and are incorporated in and constitute a part of this specification. The drawings illustrate examples of the application and, together with the description, serve to explain the principles of the application.

FIG. 1 is a block diagram of a mobile device according to an example of the application.

FIG. 2 is a flowchart of a location information processing method according to an example of the application.

FIG. 3 illustrates an example of a location information display interface according to an example of the application.

FIG. 4 is a flowchart of a location information processing method according to an example of the application.

FIG. 5 illustrates an example of a location information display interface according to an example of the application.

### DESCRIPTION OF THE EXAMPLES

Reference will now be made in detail to the present examples of the application, examples of which are illustrated in the accompanying drawings. Wherever possible, the same reference numbers are used in the drawings and the description to refer to the same or like parts.

In the application, a convenient tool for recording location information of previously passed places is provided to a user, wherein a current location of the user and location information of previously passed places are displayed so that the user can get to know his/her whereabout and the locations and sequence of those places he/she has passed before and can find routes to go back to these places.

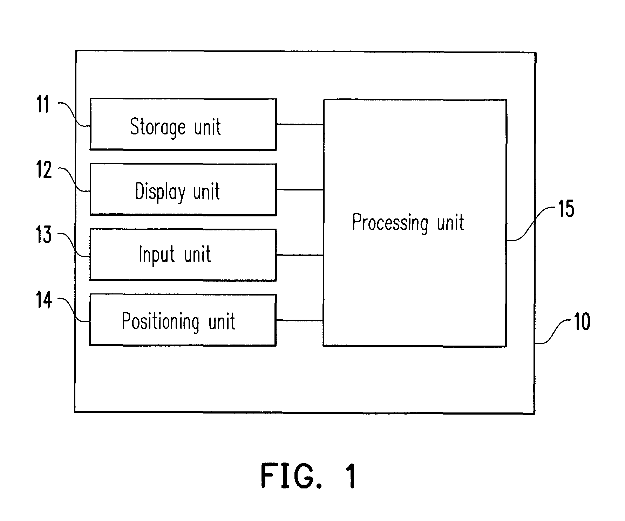

FIG. 1 is a block diagram of a mobile device according to an example of the application. Referring to FIG. 1, in the present example, the mobile device 10 may be a cell phone, a smart phone, a personal digital assistant (PDA), a PDA phone, a tablet PC, or a car PC. The mobile device 10 comprises a storage unit 11, a display unit 12, an input unit 13, a positioning unit 14, and a processing unit 15. The functions of foregoing components will be respectively described below.

The storage unit 11 is a storage medium, such as a hard disk or a memory. The storage unit 11 stores location information recorded by the mobile device 10. Herein the location information may be the coordinates, addresses, or points of interest (POIs) of specific places. However, the content of the location information is not limited in the application.

The display unit 12 may be a liquid crystal display (LCD), a light-emitting diode (LED) display, a field emission display (FED), or any other type of display.

The input unit 13 is an input device, such as a mouse, a keyboard, a joy stick, or a touch panel, and which is configured to receive user operations. The input unit 13 may also be a resistive, capacitive, or any other type of touch sensing device, and which may be integrated with the display unit 12 to form a touch screen.

The positioning unit 14 positions the mobile device 10 to obtain the current location information of the mobile device 10. The positioning unit 14 may be the Global Positioning System (GPS) or a communication and positioning system which uses the Global System for Mobile Communication (GSM), the Personal Handy-phone System (PHS), the Code Division Multiple Access (CDMA) system, the Wireless fidelity (Wi-Fi) system, the Worldwide Interoperability for Microwave Access (WiMAX) system, a radio repeater, or a radio broadcaster to perform positioning operations. However, the type of the positioning unit 14 is not limited in the application.

The processing unit 15 may be a central processing unit (CPU) or a programmable microprocessor, a digital signal processor (DSP), a programmable controller, an application specific integrated circuit (ASIC), a programmable logic device (PLD), or any other similar device, or a combination of foregoing devices for general or specific purposes. The processing unit 15 is configured to execute all operations of the mobile device 10.

The processing unit 15 is coupled to the storage unit 11, the display unit 12, the input unit 13, and the positioning unit 14. The processing unit 15 is able to compare the location information detected by the positioning unit 14 with the location information displayed in the display unit 12 to update the location information. Below, how the mobile device 10 updates the location information will be explained in detail with reference to an example.

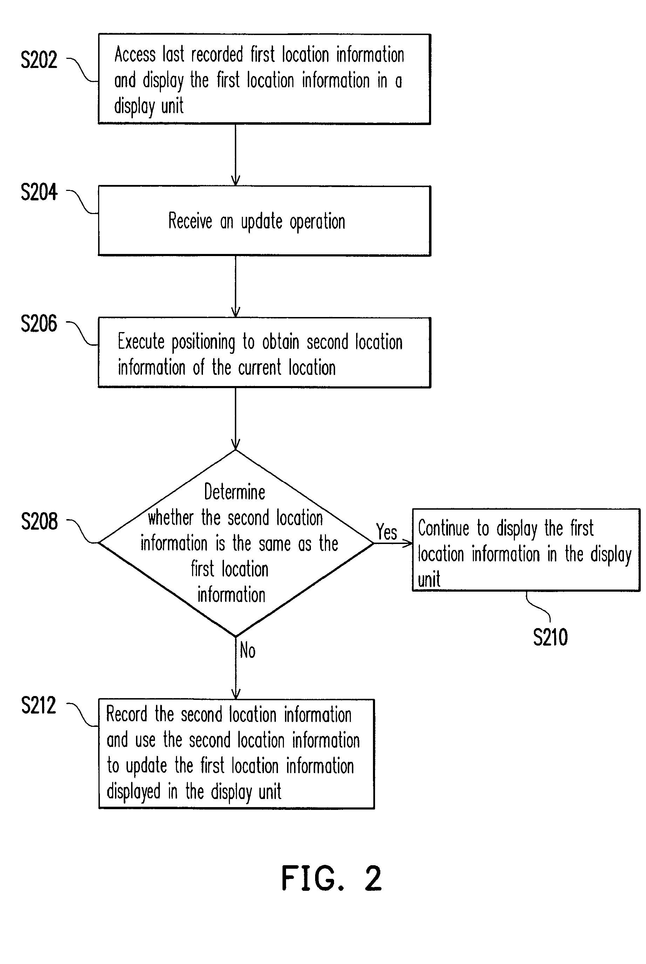

FIG. 2 is a flowchart of a location information processing method according to an example of the application. Referring to FIG. 2, the location information processing method in the present example is adapted to the mobile device 10 illustrated in FIG. 1. Below, various steps of the location information processing method provided by the application will be described with reference to various components in the mobile device 10.

First, the processing unit 15 accesses last recorded first location information and displays the first location information in the display unit 12 (step S202). To be specific, every time when a user starts the location display function of the mobile device 10, the processing unit 15 finds the latest (i.e., the last recorded) location information in the storage unit 11 and displays it in the display unit 12 so that the user can get to know the locations of previously passed place.

It should be noted that the location information accessed by the processing unit 15 may be a set of coordinates, an address, or a POI, and when the location information is displayed, the processing unit 15 may display the coordinates, address, and/or name of the corresponding place in a text form or may even display an electronic map around the place and mark the place in the electronic map, so as to allow the user to understand the location information around the location.

If the user has left a previous place and is about to record the location of a current place, the user may press an update button displayed in the display unit 12 through the input unit 13. In this case, the processing unit 15 receives an update operation (step S204) and accordingly controls the positioning unit 14 to position the mobile device 10, so as to obtain second location information of the current location of the mobile device 10 (step S206).

Before updating the location information, the processing unit 15 first determines whether the current location departs from the previously recorded location so as to prevent the location information of the same place from being repeatedly recorded. To be specific, the processing unit 15 compares the second location information detected by the positioning unit 14 with the first location information displayed in the display unit 12 to determine whether the first location information and the second location information are the same (step S208). Herein the processing unit 15 may directly compare the coordinates of the two location information to determine whether the two places are the same. In another example, the processing unit 15 may also preset an error range for tolerating certain positioning errors. For example, the processing unit 15 first calculates the distance between the first location information and the second location information and then determines whether the distance exceeds a threshold. If the distance exceeds the threshold, the processing unit 15 determines that the second location information is different from the first location information. Otherwise, if the distance does not exceed the threshold, the processing unit 15 determines that the second location information is the same as the first location information.

If the processing unit 15 determines that the second location information is the same as the first location information, it continues to display the first location information in the display unit 12 without updating it (step S210). Contrarily, if the processing unit 15 determines that the second location information is different from the first location information, it records the second location information into the storage unit 11 and uses the second location information to update the first location information displayed in the display unit 12 (step S212). Thereby, the user can update and record the location information of places he/she passes by anytime, and subsequently, can search for the routes for going back to these places.

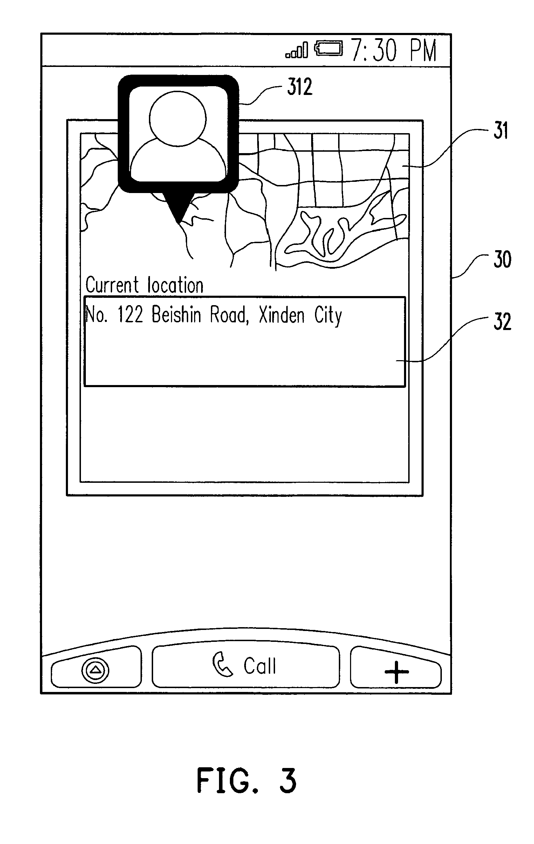

FIG. 3 illustrates an example of a location information display interface according to an example of the application. Referring to FIG. 3, in the present example, the location information display interface 30 comprises a map display field 31 and a location information display field 32. An electronic map around the current location of the mobile device is displayed in the map display field 31, wherein the electronic map may be displayed in a 2D or a 3D mode, and the location of the mobile device is indicated in the electronic map with a mark or icon 312 (for example, a photo of the user). The address 322 of the current location of the mobile device may be displayed in the location information display field 32 so that the user can get to know his/her whereabout.

It should be noted that besides displaying the location information, in the application, an error range of the location information, nearby POI information, and history records of previously passed places are also displayed in the mobile device, and a plurality of function buttons for operating the location information are further displayed to provide a complete processing functionality. Below, another example will be described in detail.

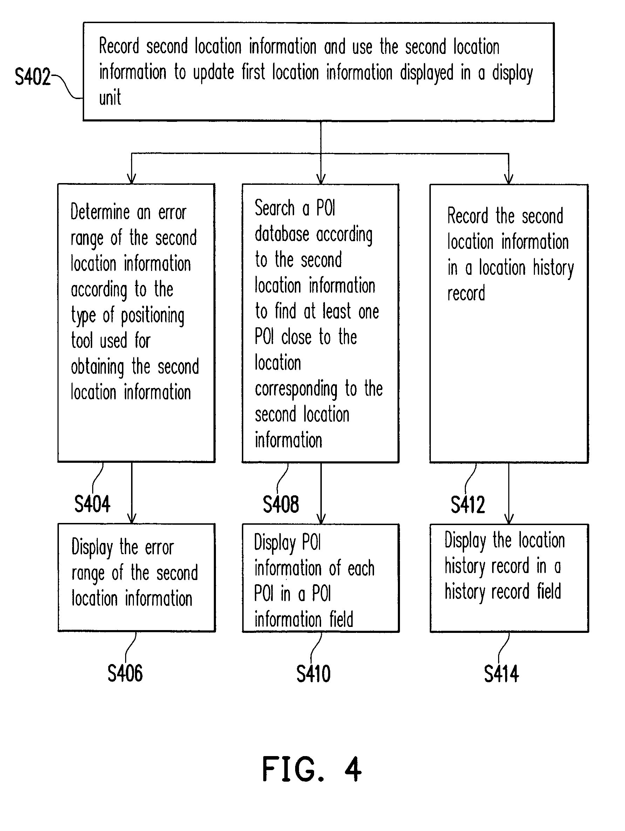

FIG. 4 is a flowchart of a location information processing method according to an example of the application. Referring to FIG. 4, in the present example, other related information is further displayed at the same time when the second location information is updated after step S212 in the example described above.

First, the processing unit 15 records the second location information into the storage unit 11 and uses the second location information to update the first location information displayed in the display unit 12 (step S402).

After confirming that the second location information is updated, the processing unit 15 further determines the error range of the second location information according to the type of the positioning tool used by the mobile device 10 for obtaining the second location information or the intensity of the positioning signal (step S404) and displays the error range in the display unit 12 (step S406). To be specific, an existing mobile device may select different positioning technique (for example, GPS outdoors and WiFi indoors) based on whether it can receive any signal from its current location or the intensity of a received signal. Or, the user may select a desired positioning technique. Because different positioning techniques or different signal intensities come with different errors, an error range should be provided to the user as a reference.

Additionally, the processing unit 15 searches a POI database according to the second location information detected by the positioning unit 14 to find out at least one POI close to the location corresponding to the second location information (step S408). Next, the processing unit 15 accesses the POI information of each POI and displays the POI information in the POI information field of the display unit 12 (step S410). Herein the POI database may be built in the storage unit 11 of the mobile device 10 or stored in a remote server (not shown) and is queried by the mobile device 10 to find out the desired POI information.

It should be noted that in an example, the processing unit 15 may indicate the names of one or more POIs and the distance between each POI and the second location information. While in another example, the processing unit 15 may also indicate the detailed information (for example, name, address, phone number, and description) of the POI closest to the current location for the user's reference.

In yet another example, the processing unit 15 may indicate the names of a fixed number of POIs (for example, three) and display a "More" option to allow the user to browse the other POIs. Or, the processing unit 15 may also display the names of a specific number of POIs within a fixed display area configured on the screen and allow the user to scroll up and down to browse the other POIs (or display a "More" option to allow the user to browse the other POIs).

When the processing unit 15 obtains the second location information detected by the positioning unit 14, it further records the second location information into a location history record in the storage unit 11 (step S412) and displays the location history record in a history record field in the display unit 12 (step S414) so that the user can understand the places he/she has passed before and the sequence thereof.

Similarly, the processing unit 15 may indicate a fixed number of history records (or history records within a fixed time period) and display a "More" option to allow the user to browse other history records. Or, the processing unit 15 may also display a specific number of history records within a fixed display area configured on the screen and allow the user to scroll up and down to browse other history records (or display a "More" option to allow the user to browse other history records).

Besides displaying the second location information, the error range, the POI information, and the location history records, the processing unit 15 may further display a plurality of function buttons in the display unit 12 such that the user can perform various operations on foregoing displayed information.

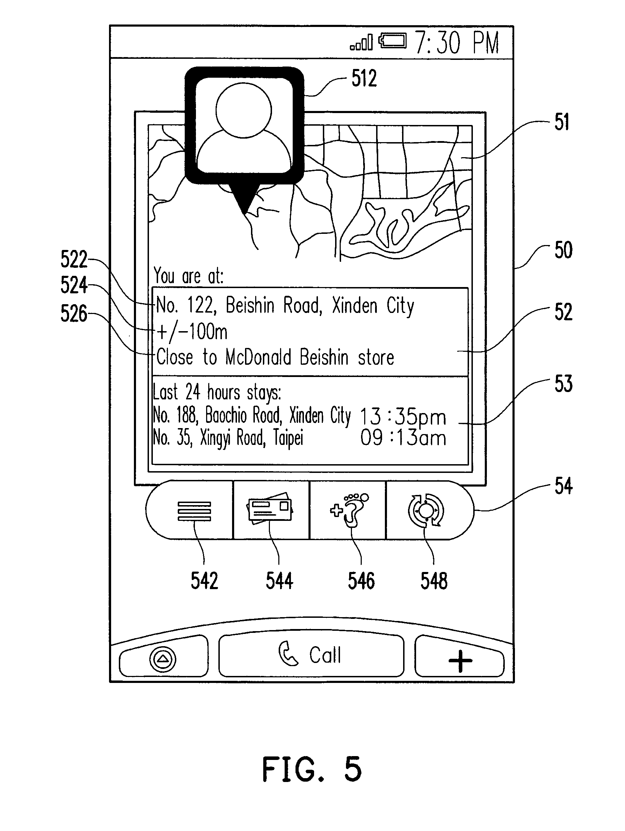

FIG. 5 illustrates an example of a location information display interface according to an example of the application. Referring to FIG. 5, in the present example, the location information display interface 50 comprises a map display field 51, a location information display field 52, a location history record field 53, and a function button bar 54. An electronic map around the location of the mobile device is displayed in the map display field 51, and the location of the mobile device is indicated in the electronic map with a mark or icon 512 (for example, a photo of the user). The address 522 of the current location of the mobile device, an error range 524 of the address 522, and the name 526 of the POI closest to the address 522 may be displayed in the location information display field 52. Location information (for example, addresses, POIs, and/or coordinates) recorded by the mobile device in the last 24 hours and the time for recording the location information may be displayed in the location history record field 53 as a list.

The function button bar 54 may comprise a POI list button 542, a location sharing button 544, a location recording button 546, and a location updating button 548. The user may press the POI list button 542 to control the mobile device to list a plurality of POIs around the current location and related information thereof.

Additionally, the user may share information of his/her current location with his/her contacts by pressing the location sharing button 544. When the mobile device receives a select operation on the location sharing button 544 from the user, it converts the location information and the POI information currently displayed in the location information display field 52 into a message and sends the message to a contact appointed by the user. Herein the message may be transmitted as a short message service (SMS) message, a multimedia message service (MMS) message, or an e-mail and may contain text, pictures, maps, files or maps that can be opened by a web browser, or files that can only be opened by a specific function or software.

Moreover, the user may record the address 522 displayed in the location information display field 52 into a storage medium of the mobile device by pressing the location recording button 546 and control the mobile device to perform a positioning operation by pressing the location updating button 548, so as to obtain the location information of the current location and update the address 522 displayed in the location information display field 52.

In another example, besides being controlled by the user through the location updating button 548 to obtain the location information of the current location, the mobile device may also automatically obtain the location information of the current location when the user switches from another interface to the location information display interface illustrated in FIG. 5 or switches to the location information display interface and stays for a predetermined time. For example, when the user uses a SMS message display interface (or a contact display interface or any other operation interface) and then switches to the location information display interface and stays in the location information display interface for over a predetermined time, the user may need to view the current location information or use related functions. In this case, the mobile device automatically performs a positioning operation to obtain the location information of the current location and determines whether to update the content of the location information display field 52.

The application also provides a computer program product to be loaded into a mobile device to execute various steps of the location information processing method described above. The computer program product is composed of a plurality of program instructions (for example, an organization chart establishing program instruction, a table approving program instruction, a setting program instruction, and a deployment program instruction, etc). These program instructions may be loaded into a mobile device and executed by the same to accomplish the location information processing method described above.

In summary, the application provides a method, a mobile device, and a computer program product for processing location information, wherein the latest location information and history records of previously passed places are displayed in a mobile device as a reference to a user. The application further provides different function buttons such that a user can perform different processing functions (for example, browsing POI information, sharing and recording current location information, and updating location information, etc.) by pressing these function buttons.

It will be apparent to those skilled in the art that various modifications and variations can be made to the structure of the application without departing from the scope or spirit of the application. In view of the foregoing, it is intended that the application cover modifications and variations of this application provided they fall within the scope of the following claims and their equivalents.

## Claims

1. A location information processing method, adapted to a mobile device (10) having a screen, the location information processing method comprising:
accessing (S202) a first location information last recorded by the mobile device (10) and displaying the first location information on the screen;
receiving (S204) an update operation;
positioning (S206) the mobile device (10) to obtain second location information of a current location of the mobile device (10);
comparing (S208) the second location information with the first location information; and
if the second location information is different from the first location information, recording (S212) the second location information and using the second location information to update the first location information displayed on the screen.

2. The method according to claim 1, wherein the step of recording the second location information and using the second location information to update the first location information displayed on the screen further comprises:
determining (S404) an error range of the second location information according to the type of a positioning tool used for positioning the mobile device (10) to obtain the second location information; and
displaying (S406) the error range on the screen.

3. The method according to claim 1 or 2, wherein the step of using the second location information to update the first location information displayed on the screen further comprises:
searching (S408) a point-of-interest (POI) database to find at least one POI close to a location corresponding to the second location information; and
accessing POI information of the POI and displaying (S410) the POI information in a POI information field on the screen.

4. The method according to any one of claims 1 to 3, wherein after the step of accessing the POI information of the POI and displaying the POI information in the POI information field on the screen, the method further comprises:
receiving a share operation; and
converting the second location information and the POI information into a message and sending the message to at least one contact appointed by the share operation.

5. The method according to any one of claims 1 to 4, wherein the step of recording the second location information and using the second location information to update the first location information displayed on the screen further comprises:
recording (S412) the second location information in a location history record;
and
displaying (S414) the location history record in a history record field (53) on the screen.

6. The method according to any one of claims 1 to 5, wherein the step of comparing the second location information with the first location information comprises:
calculating a distance between the first location information and the second location information and determining whether the distance exceeds a threshold;
if the distance exceeds the threshold, determining that the second location information is different from the first location information; and
if the distance does not exceed the threshold, determining that the second location information is the same as the first location information.

7. The method according to any one of claims 1 to 6 further comprising:
displaying a location information display interface, and displaying the first location information in the location information display interface; and
wherein the step of receiving the update operation comprises:
receiving an operation for switching to the location information display interface.

8. A computer program product comprising program instructions for executing the location information processing method according to any one of claims 1 to 7.

9. A mobile device (10) for processing location information, comprising:
a storage unit (11), configured to record a plurality of location information;
a display unit (12), configured to display first location information last recorded by the storage unit (11);
an input unit (13), configured to receive an operation from a user;
a positioning unit (14), configured to perform a positioning operation to obtain a second location information of a current location; and
a processing unit (15), coupled to the storage unit (11), the display unit (12), the input unit (13), and the positioning unit (14), wherein when the input unit (13) receives an update operation, the processing unit (15) controls the positioning unit (14) to perform the positioning operation and compares the second location information with the first location information, and if the second location information is different from the first location information, the processing unit (15) records the second location information into the storage unit (11) and uses the second location information to update the first location information displayed by the display unit (12).

10. The mobile device (10) according to claim 9, wherein the processing unit (15) further displays a positioning error range in the display unit (12).

11. The mobile device (10) according to claim 9 or 10, wherein the processing unit (15) further searches a POI database to find at least one POI close to a location corresponding to the second location information, accesses POI information of the POI, and displays the POI information in a POI information field in the display unit (12).

12. The mobile device (10) according to any one of claims 9 to 11, wherein when the input unit (13) receives a share operation, the processing unit (15) further converts the second location information and the POI information into a message and sends the message to at least one contact appointed by the share operation.

13. The mobile device (10) according to any one of claims 9 to 12, wherein the processing unit (15) further records the second location information in a location history record in the storage unit (11) and displays the location history record in a history record field (53) in the display unit (12).

14. The mobile device (10) according to any one of claims 9 to 13, wherein the processing unit (15) calculates a distance between the first location information and the second location information and determines whether the distance exceeds a threshold, wherein if the distance exceeds the threshold, the processing unit (15) determines that the second location information is different from the first location information, and if the distance does not exceed the threshold, the processing unit (15) determines that the second location information is the same as the first location information.

15. The mobile device (10) according to any one of claims 9 to 14, wherein the display unit (12) further displays a location information display interface and displays the first location information in the location information display interface, and the update operation comprises an operation for switching to the location information display interface.
